# EUROPÄISCHE PATENTANMELDUNG

(11) **EP 1 018 523 A2**
(43) Veröffentlichungstag der Anmeldung: **12.07.2000**
(21) Anmeldenummer: 00100366.4
(22) Anmeldetag: 07.01.2000
(51) Int. Cl.: C08F 265/02, C08F 267/02, C08F 2/22, C09D 151/00, C09J 151/00

(54) **Polymerdispersion**

(30) Priorität: 08.01.1999 DE 19900459
(71) Anmelder: BASF AKTIENGESELLSCHAFT, 67056 Ludwigshafen (DE)
(72) Erfinder: Dreher, Stefan, Dr., 67433 Neustadt (DE); Reck, Bernd, Dr., 67269 Grünstadt (DE); Seufert, Michael, Dr., 67098 Bad Dürkheim (DE); Türk, Johannes, 67459 Böhl-Iggelheim (DE)
(74) Vertreter: Kinzebach, Werner, Dr.

(57) **Zusammenfassung**

Beschrieben wird eine Polymerdispersion, die in einem wässrigen Medium (a) dispergierte Teilchen eines Polymerisats, das mehr als 5 bis 20 Gew.-% α,β-ethylenisch ungesättigter Mono- oder Dicarbonsäure enthält, (b) ein gelöstes Polymerisat, das 60 bis 100 Gew.-% α,β-ethylenisch ungesättigter Mono- oder Dicarbonsäure enthält und (c) ein alkoxyliertes langkettiges Amin enthält. Durch Zugabe von polyfunktionellen Alkoholen und wahlweise von Reaktionsbeschleuniger werden thermisch härtbare Zusammensetzungen erhalten. Die Polymerdispersionen und die thermisch härtbaren Zusammensetzungen sind als Bindemittel für textile Flächengebilde und für Formkörper geeignet.

## Beschreibung

Die vorliegende Erfindung betrifft eine Polymerdispersion und eine diese enthaltende thermisch härtbare Zusammensetzung, die als Bindemittel für verschiedene Anwendungen, insbesondere als Bindemittel für teilchen- oder faserförmige Substrate, geeignet sind.

Zur Bindung von Holz-, Textil- oder Naturfasern oder zur Beschichtung von Holz oder mineralischen Untergründen werden häufig Mischungen säurereicher Lösungspolymerisate und säurearmer oder -freier Emulsionspolymerisate verwendet, da mit diesen Mischungen eine hohe mechanische Festigkeit und eine Hydrophobisierung des Substrats erreicht werden kann.

Die US-5314943 beschreibt ein niedrigviskoses schnellhärtendes Bindemittel für textile Substrate, bei dem sich sich um ein Gemisch eines wässrigen Emulsionscopolymerlatex mit einem wässrigen Lösungscopolymer handelt. Das wässrige Lösungscopolymer wird durch Copolymerisation einer α,β-ethylenisch ungesättigten Monocarbonsäure und einer α,β-ethylenisch ungesättigten Dicarbonsäure erhalten. Der Emulsionscopolymerlatex enthält Einheiten von Monomeren, die unter Alkenylaromaten, konjugierten Diolefinen, Vinylacetat und Acrylaten ausgewählt sind.

Aus der US-780743 und der EP-537910 sind Gemische von Emulsionspolymerisaten, die vorzugsweise aus Styrol und n-Butylacrylat aufgebaut sind, mit säurereichen wasserlöslichen Polymerisaten bekannt, die bei der Verwendung als Bindemittel für Anstriche zu Beschichtungen mit guter Substratbenetzung und hoher Lösemittelbeständigkeit führen sollen.

Die EP-257567 beschreibt eine Polymerzusammensetzung, die durch Emulsionspolymerisation ethylenisch ungesättigter Monomere, wie Olefine, vinylaromatischer Verbindungen, α,β-ethylenisch ungesättigter Carbonsäuren und deren Ester, ethylenisch ungesättigter Dicarbonsäureanhydride oder Vinylhalogenide, erhältlich ist. Während der Polymerisation wird ein in Wasser oder Alkali lösliches oder dispergierbares Harz mit einem zahlenmittleren Molekulargewicht von etwa 500 bis 20000 g/mol dazugegeben, um die Fließeigenschaften der Polymerisatzusammensetzung zu beeinflussen. Das wasser- oder alkalilösliche oder dispergierbare Harz kann z.B. aus Olefinen, vinylaromatischen Verbindungen, α,β-ethylenisch ungesättigten Carbonsäuren und deren Estern oder ethylenisch ungesättigten Dicarbonsäureanhydriden aufgebaut sein.

Aus der US-773233 sind Polymerlatices bekannt, die durch Emulsionspolymerisation in Gegenwart von wasserlöslichen säurehaltigen Polymeren, vorzugsweise Styrol-Acrylsäure-Copolymerisaten und natürlichen Fettsäuren hergestellt werden. Die erhaltenen Polymerdispersionen sollen sich durch eine geringe Schaumneigung auszeichnen und sich daher als Bindemittel für Druckfarben auf Wasserbasis oder Holzgrundierungen eignen.

In der US-4670505 ist eine Polyacrylat-Dispersion beschrieben, die durch Emulsionspolymerisation in Gegenwart von 0,05 bis 5 Gew.-% eines Schutzkolloids, z.B. Polyacrylsäure oder deren Alkalisalze, sowie 0,1 bis 5 Gew.-% eines wasserlöslichen Aminoalkohols mit 2 bis 36 Kohlenstoffatomen hergestellt wird. Die erhaltene Dispersion besitzt eine geringe Viskosität, ein gutes Pigmentbindevermögen und ist im Wesentlichen stippenfrei und scherstabil. Bei höheren Mengen an Polyacrylsäure soll die Zusammensetzung eine sehr hohe Viskosität zeigen, was der Anwendung als Bindemittel z.B für faserige Substrate entgegensteht.

Es hat sich gezeigt, dass die bekannten Bindemittelsysteme polare Fasern, wie Holz, Flachs, Jute, Sisal, Hanf, Baumwolle, Glas- oder Mineralwolle nur unzureichend benetzen. Außerdem ist die Scher-, Elektrolyt- und Frost-Tau-Beständigkeit der bekannten Bindemittel verbesserungswürdig.

Der vorliegenden Erfindung liegt daher die Aufgabe zugrunde, eine Polymerdispersion und diese enthaltende thermisch härtbare Zusammensetzungen bereitzustellen, die bei gegebenem Feststoffgehalt ein hohes Benetzungsvermögen für polare Fasern zeigen und gleichzeitig eine wünschenswert niedrige Viskosität aufweisen.

Erfindungsgemäß wird diese Aufgabe durch eine Polymerdispersion gelöst, die in einem wässrigen Medium enthält:
a) dispergierte Teilchen eines Polymerisats aus Einheiten ethylenisch ungesättigter Monomere, wovon mehr als 5 bis 20 Gew.-% α,β-ethylenisch ungesättigte Mono- oder Dicarbonsäuren darstellen;
b) ein gelöstes Polymerisat, das in einpolymerisierter Form 60 bis 100 Gew.-% wenigstens einer α,β-ethylenisch ungesättigten Mono- oder Dicarbonsäure oder Salze davon enthält; und
c) ein Amin der Formel I 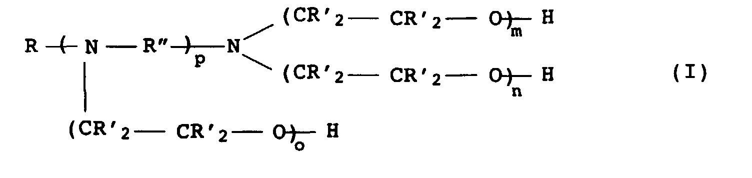 worin
   - R: für einen Alkyl- oder Alkylenrest mit mindestens 6 Kohlenstoffatomen oder einen Alkylphenylrest mit mindestens 6 Kohlenstoffatomen in der Alkylgruppe steht;
   - R': jeweils unabhängig für H oder C₁₋₄-Alkyl steht;
   - R'': für C₁₋₄-Alkylen steht;
   - m, n und o: unabhängig voneinander für eine Zahl ≥ 0 stehen, mit der Maßgabe, dass mindestens ein Wert von m, n und o von 0 verschieden ist,
   - p: für 0 oder 1 steht,
wobei das Gewichtsverhältnis auf Feststoffbasis der dispergierten Teilchen zu gelöstem Polymerisat im Bereich von 7:1 bis 1:7 und das Gewichtsverhältnis von gelösten Polymerisat zu Amin im Bereich von 20:1 bis 2:1 liegt;
wobei die Polymerdispersion erhältlich ist durch Emulsionspolymerisation der ethylenisch ungesättigten Monomere in Gegenwart des gelösten Polymerisats und des Amins der Formel I.

Die Erfindung betrifft außerdem eine thermisch härtbare Zusammensetzung, die eine vorstehend beschriebene Polymerdispersion und einen multifunktionellen Alkohol und wahlweise einen Reaktionsbeschleuniger enthält.

Die erfindungsgemäße Polymerdispersion weist einen vergleichsweise hohen Anteil an Säuremonomeren auf. So enthalten die dispergierten Teilchen mehr als 5 bis 20 Gew.-% einer α,β-ethylenisch ungesättigten Mono- oder Dicarbonsäure. Die Polymerdispersion enthält außerdem ein im wässrigen Medium gelöstes Polymerisat, das 60 bis 100 Gew.-% α,β-ethylenisch ungesättigter Mono- oder Dicarbonsäuren in einpolymerisierter Form enthält. Überraschenderweise weist die erfindungsgemäße Polymerdispersion eine relativ geringe Viskosität auf. Bei einem Feststoffgehalt von etwa 40 Gew.-% liegt die Viskosität der erfindungsgemäßen Polymerdispersion im Allgemeinen im Bereich von 10 bis 2000 mPas, insbesondere von 30 bis 1000 mPas, gemessen mit einem Rotationsviskosimeter gemäß DIN 53019 bei 23°C und einer Schergeschwindigkeit von 250 s⁻¹.

Es wurde gefunden, dass zwei- oder dreidimensionale Gebilde, insbesondere in Form von textilen Flächengebilden beziehungsweise Formteilen, die durch Imprägnieren von teilchen- oder faserförmigen Substraten mit der vorstehend beschriebenen Polymerdispersion und anschließende thermischer Härtung hergestellt worden sind, eine hohe mechanische Festigkeit sowie eine hohe Wasser- und Feuchtigkeitsbeständigkeit aufweisen. Besonders vorteilhafte Eigenschaften werden erhalten, wenn zur Imprägnierung der teilchen- oder faserförmigen Substrate eine erfindungsgemäße thermisch härtbare Zusammensetzung verwendet wird, die neben der erfindungsgemäßen Polymerdispersion einen multifunktionellen Alkohol und wahlweise einen Reaktionsbeschleuniger enthält.

Polymerdispersionen, die in den dispergierten Polymerisatteilchen weniger als 5 Gew.-% α,β-ethylenisch ungesättigter Carbonsäure enthalten, führen zu Bindemitteln mit einer deutlich schlechteren Benetzung polarer Fasern. Die damit erhaltenen Formkörper zeigen eine deutlich geringere Wasser- und Feuchtklimabeständigkeit. Die unzureichende Wasser- und Feuchtklimabeständigkeit der Dispersionen mit weniger als 5 Gew.-% Carbonsäure enthaltenden Polymerisatteilchen läßt sich auch durch Zusatz von multifunktionellen Alkoholen und Reaktionsbeschleunigern nicht wesentlich verbessern.

In bevorzugten erfindungsgemäßen Polymerdispersionen liegt das Gewichtsverhältnis von dispergierten Polymerisatteilchen zu gelöstem Polymerisat im Bereich von 5:1 bis 1:5, insbesondere im Bereich von 3:1 bis 1:3. Das Gewichtsverhältnis von gelöstem Polymerisat zu Amin der Formel I liegt vorzugsweise im Bereich von 1:10 bis 3:1.

Die dispergierten Polymerisatteilchen sind aus Einheiten ethylenisch ungesättigter Monomere aufgebaut. Sie sind durch radikalische Emulsionspolymerisation von mehr als 5 bis 20 Gew.-%, bezogen auf die Gesamtmonomeren, wenigstens einer α,β-ethylenisch ungesättigten Mono- oder Dicarbonsäure oder deren Anhydride und 80 bis weniger als 95 Gew.-% eines oder mehrerer davon verschiedenen copolymerisierbaren ethylenisch ungesättigten Monomeren (Hauptmonomer) erhältlich.

Als Säuremonomere sind unter anderem geeignet: α,β-ethylenisch ungesättigte C₃-C₁₀-Monocarbonsäuren, z.B. Acrylsäure, Methacrylsäure, Crotonsäure, Dimethacrylsäure, Ethylacrylsäure, Allylessigsäure oder Vinylessigsäure; sowie α,β-ethylenisch ungesättigte C₄-C₈-Dicarbonsäuren, deren Halbester und Anhydride, z.B. Maleinsäure, Fumarsäure, Itakonsäure, Mesakonsäure, Methylenmalonsäure, Citrakonsäure, Maleinsäureanhydrid, Itakonsäureanhydrid oder Methylmalonsäureanhydrid.

Bevorzugte α,β-ungesättigte Mono- oder Dicarbonsäuren sind Acrylsäure, Methacrylsäure, Itakonsäure, Maleinsäure, Fumarsäure und/oder Crotonsäure. Unter den Anhydriden sind Methacrylsäureanhydrid und Maleinsäureanhydrid bevorzugt.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäuren, wie Acrylsäure, Methacrylsäure, Maleinsäure, Fumarsäure und Itaconsäure, mit im Allgemeinen C₁ bis C₁₂-, vorzugweise C₁ bis C₈- und insbesondere C₁ bis C₄-Alkanolen. Derartige Ester sind insbesondere Methyl-, Ethyl-, n-Butyl-, Isobutyl-, tert.-Butyl- und 2-Ethylhexylacrylat und -methacrylat;
- vinylaromatischen Verbindungen, wie Styrol, α-Methylstyrol, o-Chlorstyrol oder Vinyltoluole;
- Vinylestern von C₁-C₁₈-Mono- oder -Dicarbonsäuren, wie Vinylacetat, Vinylpropionat, Vinyl-n-butyrat, Vinyllaurat und Vinylstearat;
- Butadien;
- lineare 1-Olefine, verzweigtkettige 1-Olefine oder cyclische Olefine, wie z.B. Ethen, Propen, Buten, Isobuten, Penten, Cyclopenten, Hexen, Cyclohexen.
- Weiterhin sind metallocenkatalytisch hergestellte Oligoolefine mit endständiger Doppelbindung, wie z.B. Oligopropen oder Oligohexen geeignet. Vorzugsweise ist jedoch kein Ethen oder kein lineares 1-Olefin in das Polymerisat einpolymerisiert.
- Acrylnitril, Methacrylnitril.
- Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine beziehungsweise mehrere Alkoxylatgruppen tragen kann, wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether beziehungsweise deren Mischungen.
- Acrylamide und alkylsubstituierte Acrylamide, wie z.B. Acrylamid, Methacrylamid, N-tert.-Butylacrylamid, N-Methyl-(meth)acrylamid.
- Sulfogruppenhaltige Monomere, wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen sowie Sulfopropylacrylat, Sulfopropylmethacrylat.
- C₁- bis C₄-Hydroxyalkylester von C₃- bis C₆-Mono- oder Dicarbonsäuren (siehe oben), insbesondere der Acrylsäure, Methacrylsäure oder Maleinsäure, oder deren mit 2 bis 50 Mol Ethylenoxid, Propylenoxid, Butylenoxid oder Mischungen davon alkoxylierte Derivate, oder Ester von mit 2 bis 50 Mol Ethylenoxid, Propylenoxid, Butylenoxid oder Mischungen davon alkoxylierten C₁- bis C₁₈-Alkoholen mit den erwähnten Säuren, wie z.B. Hydroxyethyl-(meth)acrylat, Hydroxypropyl(meth)acrylat, Methylpolyglykolacrylat.
- Vinylphosphonsäure, Vinylphosphonsäuredimethylester und andere phosphorhaltige Monomere.
- Alkylaminoalkyl(meth)acrylate oder Alkylaminoalkyl(meth)acrylamide oder deren Quaternisierungsprodukte, wie z.B. 2-(N,N-Dimethylamino)ethyl(meth)acrylat, 3-(N,N-Dimethyl-amino)-propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.
- Allylester von C₁- bis C₃₀-Monocarbonsäuren.
- N-Vinylverbindungen, wie N-Vinylformamid, N-Vinyl-N-methylformamid, N-Vinylpyrrolidon, N-Vinylimidazol, 1-Vinyl-2-methylimidazol, 1-Vinyl-2-methyl-imidazolin, N-Vinylcaprolactam, Vinylcarbazol, 2-Vinylpyridin, 4-Vinylpyridin.
- Diallyldimethylammoniumchlorid, vinylidenchlorid, Vinylchlorid, Acrolein, Methacrolein.
- 1,3-Diketogruppen enthaltende Monomere wie z.B. Acetoacetoxyethyl(meth)acrylat oder Diacetonacrylamid, harnstoffgruppenhaltige Monomere, wie Ureidoethyl(meth)acrylat, Acrylamidoglykolsäure, Methacrylamidoglykolatmethylether.
- Silylgruppen enthaltende Monomere wie z.B. Trimethoxysilyl-propylmethacrylat.
- Glycidylgruppen enthaltende Monomere wie z.B. Glycidylmethacrylat.

Besonders bevorzugte Hauptmonomere sind Styrol, Methyl(meth)acrylat, n-Butylacrylat, Ethylacrylat, 2-Ethylhexylacrylat, Vinylacetat, Butadien, Acrylnitril, Acrylamid, Hydroxyethylacrylat, Hydroxyethyl(meth)acrylat und Glycidyl(meth)acrylat.

Bei dem gelösten Polymerisat handelt es sich um ein wasserlösliches, durch radikalische Polymerisation erhältliches Polymerisat, das in einpolymerisierter Form 60 bis 100 Gew.-%, vorzugsweise 80 bis 100 Gew.-%, bezogen auf die gesamten Monomereinheiten des gelösten Polymerisats, wenigstens einer α,β-ethylenisch ungesättigten Mono- oder Dicarbonsäure, oder Salze davon, wie Alkalimetallsalze, z.B. das Natrium- oder Kaliumsalz, und/oder Ammoniumsalze, enthält. Geeignete Säuremonomere sind vorstehend im Zusammenhang mit den dispergierten Polymerisatteilchen genannt. Acrylsäure, Methacrylsäure, Itakonsäure, Maleinsäure, Fumarsäure und/oder Crotonsäure sind bevorzugt. Neben den Mono- oder Dicarbonsäuren kann das gelöste Polymerisat noch 0 bis 40 Gew.-%, vorzugsweise 0 bis 20 Gew.-%, eines weiteren Monomers in einpolymerisierter Form enthalten. Hierzu geeignete Monomere sind die im Zusammenhang mit den dispergierten Polymerisatteilchen genannten Hauptmonomere. Hiervon sind Methylacrylat, Ethylacrylat, n-Butylacrylat, Methylmethacrylat, n-Butylmethacrylat, t-Butylmethacrylat, 2-Ethylhexylacrylat, Styrol, Acrylamid, Acrylnitril und vinylacetat bevorzugt. (Meth)acrylsäure-Copolymerisate, insbesondere (Meth)acrylsäure-Maleinsäure-Copolymerisate, sind bevorzugt.

Die Verwendung von gelösten Polymerisaten mit einem massenmittleren Molekulargewicht von weniger als 100 kg/mol, vorzugsweise weniger als 70 kg/mol, ist bevorzugt. In der Regel weist das gelöste Polymerisat ein massemittleres Molekulargewicht von mehr als 0,5 kg/mol auf.

Bei dem Amin der Formel I handelt es sich um ein oberflächenaktives, alkoxyliertes langkettiges Amin. R steht für einen Alkyl- oder Alkenylrest mit mindestens 6 Kohlenstoffatomen, wobei der Alkenylrest einfach oder mehrfach, z.B. bis zu dreifach, ungesättigt sein kann, oder für einen Alkylphenylrest mit mindestens 6 Kohlenstoffatomen in der Alkylgruppe. Vorzugsweise steht R für Alkyl- oder Alkenylreste mit 10 bis 20 Kohlenstoffatomen. R' steht jeweils unabhängig (d.h. unabhängig innerhalb der Wiederholungseinheit und zwischen unterschiedlichen Wiederholungseinheiten) für H oder C₁₋₄-Alkyl, insbesondere H oder Methyl. In besonders bevorzugten Aminen der Formel I stehen sämtliche Reste R' für H. R'' steht für C₁₋₄-Alkylen, vorzugsweise Propylen. Die Indices m, n und o stehen unabhängig voneinander für eine ganze Zahl ≥ 0, mit der Maßgabe, dass mindestens ein Wert von m, n und o von 0 verschieden ist. Der Index p kann die Werte 0 oder 1 annehmen. Es ist bevorzugt, dass die Summe (m+n) beziehungsweise, wenn p=1, (m+n+o) im Bereich von 2 bis 60, insbesondere 4 bis 30, liegt.

Geeignete Amine der Formel I werden von der Firma Elf-Atochem unter dem Handelsnamen NORAMOX (z.B. Noramox C11, S2, S11 oder O11) vertrieben. Auch die ethoxylierten Alkyldiamine DINORAMOX (z.B. Dinoramox S12) sind geeignet. Weitere geeignete Verbindungen sind von der Firma Akzo unter dem Handelsnamen ETHOMEEN sowie von der Firma BASF (LUTENSOL FA) erhältlich.

Die erfindungsgemäßen Polymerdispersionen weisen im Allgemeinen einen Gehalt an nichtflüchtigen Bestandteilen (Feststoffgehalt) von 20 bis 70 Gew.-%, vorzugsweise 25 bis 55 Gew.-%, besonders bevorzugt 40 bis 55 Gew.-%, auf. Die Viskosität der erfindungsgemäßen Polymerdispersion liegt bei einem Feststoffgehalt von etwa 40 Gew.-% im Bereich von 10 bis 2000 mPas, vorzugsweise von 30 bis 1000 mPas, gemessen mit einem Rotationaviskosimeter gemäß DIN 53019 bei 23°C und einer Schergeschwindigkeit von 250 s⁻¹.

Die erfindungsgemäße Polymerdispersion kann zur Herstellung einer thermisch härtbaren Zusammensetzung verwendet werden, die ebenfalls Gegenstand der vorliegenden Erfindung ist. Die erfindungsgemäße thermisch härtbare Zusammensetzung enthält neben einer vorstehend geschilderten Polymerdispersion einen (vom Amin der Formel I verschiedenen) multifunktionellen Alkohol und wahlweise einen Reaktionsbeschleuniger.

Besonders bevorzugte erfindungsgemäße thermisch härtbare Zusammensetzungen enthalten bezogen auf das Gesamtgewicht nichtflüchtiger Bestandteile:
- 40 bis 60 Gew.-% dispergierte Polymerteilchen;
- 20 bis 40 Gew.-% gelöstes Polymerisat;
- 6 bis 10 Gew.-% Amin der Formel I;
- bis zu 15 Gew.-% multifunktionellen Alkohol; und - 0 bis 5 Gew.-% Reaktionsbeschleuniger.

Sofern verwendet, wird der Reaktionsbeschleuniger vorzugsweise in einer Menge von bis zu 5 Gew.-%, z.B. 0,1 bis 5 Gew.-%, vorzugsweise weniger als 3 Gew.-%, bezogen auf das Gesamtgewicht nichtflüchtiger Bestandteile der Zusammensetzung, eingesetzt.

Der multifunktionelle Alkohol wird im Allgemeinen in solcher Menge relativ zur Polymerdispersion eingesetzt, dass das Gewichtsverhältnis von gelöstem Polymerisat zu multifunktionellem Alkohol im Bereich von 100:1 bis 1:1, insbesondere 50:1 bis 2:1 und besonders bevorzugt 30:1 bis 2,5:1, bezogen auf nichtflüchtige Anteile, liegt.

Als multifunktionelle Alkohole sind z.B. mehrwertige Alkohole, wie Glycol, Glycerin, Trimethylolpropan oder Pentaerythrit, geeignet. Besonders bevorzugt sind Alkanolamine mit wenigstens zwei Hydroxylgruppen, insbesondere Ethanolamine, d.h. Verbindungen mit aliphatischen Hydroxygruppen in β-Stellung zu einer Amin- oder Amidfunktion. Die Zugabe des Alkanolamins bewirkt eine schnellere Härtung der Polymerdispersionen bei gegebener Härtungstemperatur beziehungsweise eine Aushärtung bei niedrigerer Temperatur bei vorgegebener Härtungszeit. Weiterhin verbessert die Zugabe eines Alkanolamins die Filmbildung der Zusammensetzung.

Als Alkanolamine sind solche der Formel geeignet: 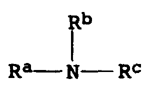 in der R^{a} für ein H-Atom, eine C₁-C₅-Alkylgruppe oder eine C₁-C₁₀-Hydroxyalkylgruppe steht und R^{b} und R^{c} für eine C₁-C₁₀-Hydroxyalkylgruppe stehen.

Besonders bevorzugt stehen R^{b} und R^{c} unabhängig voneinander für eine C₂-C₅-Hydroxyalkylgruppe und R^{a} für ein H-Atom, eine C₁-C₅-Alkylgruppe oder eine C₂-C₅-Hydroxyalkylgruppe.

Als Alkanolamine seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.
Weiterhin geeignet sind Alkanolamine, die ausgewählt sind unter wasserlöslichen, linearen oder verzweigten aliphatischen Verbindungen, die pro Molekül wenigstens zwei funktionelle Aminogruppen vom Typ (a) oder vom Typ (b) 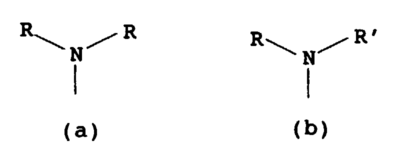 worin R für Hydroxyalkyl steht und R' für Alkyl steht, enthalten.

Besonders brauchbare Verbindungen dieses Typs sind die Verbindungen der folgenden Formeln: 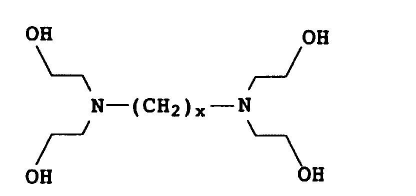 worin x für 2 bis 12, insbesondere 2 oder 6, steht, 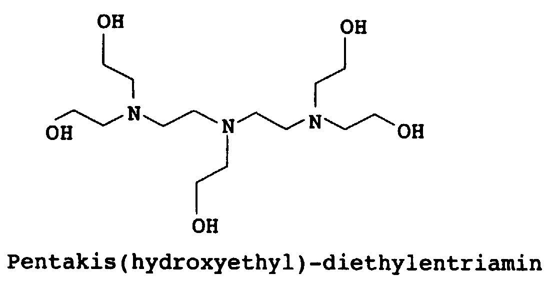 sowie Umsetzungsprodukte von Polyethyleniminen (vorzugsweise eines Polymerisationsgrades von ≤ 20) mit einem Äquivalent Ethylenoxid pro an Stickstoffatome gebundenes Wasserstoffatom.

Im Allgemeinen sind Triethanolamin und ethoxylierte polymere Alkylenimine, wie N,N,N',N'-Tetrakis(hydroxyethyl)ethylendiamin, bevorzugt.

Die erfindungsgemäße thermisch härtbare Zusammensetzung kann wahlweise einen Reaktionsbeschleuniger enthalten. Hierzu sind starke Säuren, wie z.B. Schwefelsäure, p-Toluolsulfonsäure, Salzsäure, Trichloressigsäure und Chlorsulfonsäure, geeignet. Besonders geeignete Reaktionsbeschleuniger sind phosphorhaltige Verbindungen, wie hypophosphorige Säure, Phosphorsäure oder Polyphosphorsäuren beziehungsweise deren Alkali- und Erdalkalisalze, oder Polyvinylphosphonsäuren. Weiterhin geeignet sind Tetrafluorborsäure oder Alkalitetrafluoroborate. Auch Salze von Mn(II), Ca(II), Zn(II), Al(III), Sb(III) oder Ti(V) können als Reaktionsbeschleuniger zugesetzt werden.

Die Herstellung der erfindungsgemäßen Polymerdispersion erfolgt vorzugsweise durch wässrige Emulsionspolymerisation, wobei eine absatzweise, semikontinuierliche oder kontinuierliche Fahrweise möglich ist. Es erwies sich als vorteilhaft, das gelöste Polymerisat und das Amin der Formel I ganz oder teilweise in wässriger Lösung vorzulegen und die Monomere zur Bildung der dispergierten Polymerisatteilchen in Form eines Monomerzulaufs oder, weniger bevorzugt, in Form einer Voremulsion zuzudosieren. Die Voremulsion kann beispielsweise durch Teilmengen des oberflächenaktiven Amins der Formel I stabilisiert sein.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4'-Azobis(4-cyanovaleriansäure). Auch die bekannten Redox-Initiatorsysteme wie z.B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im allgemeinen in Mengen von 0,05 bis 5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Das Dispersionsmedium für die erfindungsgemäße Polymerdispersion ist vorzugsweise Wasser. Es können jedoch auch mit Wasser mischbare organische Lösungsmittel, wie Alkohole oder Ketone, beispielsweise Methanol, Ethanol, n-Propanol, Isopropanol, Aceton oder Ethylmethylketon, bis zu einem Anteil von 30 Vol.-% enthalten sein.

Zusätzlich zu der Stabilisierung durch das gelöste Polymerisat und das Amin der Formel I können die dispergierten Polymerisatteilchen durch weitere oberflächenaktive Hilfsstoffe, wie Emulgatoren oder Schutzkolloide, stabilisiert werden. Im Allgemeinen ist die Anwesenheit weiterer oberflächenaktiver Hilfsstoffe jedoch nicht bevorzugt. Als Emulgatoren kommen anionische Emulgatoren, wie Alkylbenzolsulfonsäuren, sulfonierte Fettsäuren, Sulfosuccinate, Fettalkoholsulfate, Alkylphenolsulfate und Fettalkoholethersulfate; nichtionische Emulgatoren, wie Alkylphenolethoxylate, Primäralkoholethoxylate, Fettsäure-ethoxylate, Alkanolamidethoxylate, Ethylenoxid-Propylenoxid-Blockcopolymere und Alkylpolyglycoside; und kationische bzw. amphotere Emulgatoren, wie quaternierte Aminoalkoxylate, Alkylbetaine, Alkylamidobetaine und Sulfobetaine, in Betracht. Typische Schutzkolloide sind z.B. Cellulosederivate, Stärkederivate und Polyvinylalkohol.

Die erfindungsgemäßen Polymerdispersionen oder thermisch härtbaren Zusammensetzungen werden insbesondere als Bindemittel für die Herstellung von zwei- oder dreidimensionalen Gebilden, wie textilen Flächengebilden oder Formkörpern, aus teilchen- oder faserförmigen Substraten, wie Fasern, Schnitzeln oder Spänen, verwendet. Die zwei- oder dreidimensionalen Gebilde sind dadurch erhältlich, dass man das teilchen- oder faserförmige Substrat mit einer erfindungsgemäßen Polymerdispersion oder thermisch härtbaren Zusammensetzung imprägniert und das imprägnierte Substrat aushärtet. Die Härtungstemperaturen liegen im Allgemeinen bei 100 bis 200°C.

Bei den Substraten kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Kenaf, Bananenfasern, Hanf und Kork genannt. Besonders bevorzugt sind Holzfasern oder Holzspäne.

Die Formkörper haben bevorzugt eine Dichte von 0,2 bis 1,4 g/cm³ bei 23°C.

Als Formkörper kommen insbesondere Platten und Formteile mit unregelmäßiger Kontur in Betracht. Ihre Dicke beträgt im allgemeinen mindestens 1 mm, vorzugsweise mindestens 2 mm, ihre Oberfläche beträgt typischerweise 200 bis 200000 cm². In Betracht kommen insbesondere Automobilinnenteile, z.B. Türinnenverkleidungen, Armaturenträger, Hutablagen.

Die Gewichtsmenge des verwendeten Bindemittels beträgt im allgemeinen 0,5 bis 40 Gew.-%, vorzugsweise 1 bis 30 Gew.-% (Bindemittel fest), bezogen auf das Substrat (Fasern, Schnitzel oder Späne).

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise (insbesondere bei der Herstellung von Formkörpern aus Holzfasern oder Holzspänen) auf 10 bis 10 000, besonders bevorzugt auf 50 bis 5 000 und ganz besonders bevorzugt auf 100 bis 2500 mPa·s (DIN 53019, Rotationsviskosimeter bei 250 s⁻¹) eingestellt.

Die Mischung aus Fasern, Schnitzeln und Spänen und dem Bindemittel kann z.B. bei Temperaturen von 10 bis 150°C vorgetrocknet werden und anschließend, z.B. bei Temperaturen von 50 bis 250°C, vorzugsweise 100 bis 240°C und besonders bevorzugt 120 bis 225°C und Drücken von im allgemeinen 2 bis 1000 bar, vorzugsweise 10 bis 750 bar, besonders bevorzugt 20 bis 500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z.B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das GewichtsVerhältnis Bindemittel fest:Holzspäne vorzugsweise 0,02:1 bis 0,3:1 beträgt. Eine gleichmäßige Verteilung läßt sich beispielsweise erreichen, indem man das Bindemittel in feinverteilter Form auf die Späne auf sprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 120 bis 225°C durch Anwendung von Drücken von üblicherweise 10 bis 750 bar zu einer Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 10 bis 50 bar zu Platten oder Formkörpern verpreßt.

Die beleimten Holzfasern können auch, wie z.B. in der DE-OS 2417243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Auch andere Naturfaserstoffe wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verf ahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Bevorzugt haben die mit den erfindungsgemäßen Bindemitteln imprägnierten Substrate beim Verpressen einen Restfeuchtegehalt von 3-20 Gew.-%, bezogen auf das zu bindende Substrat.

Die erfindungsgemäß erhaltenen Formkörper haben eine geringe Wasseraufnahme, eine niedrige Dickenquellung nach Wasserlagerung, eine gute Festigkeit und sind formaldehydfrei.

Außerdem kann man die erfindungsgemäßen Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2000 mm.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten der erfindungsgemäßen Zusammensetzung sind in der Beschichtungsmasse im allgemeinen in einer Menge von 1 bis 65 Gew.-% enthalten. Der Anteil der inerten Füllstoffe liegt im allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im Allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2550465, US-A-2604427, US-A-2830648, EP-A-354913 und EP-A-567480. Die Zusammensetzung wird dann auf die frisch hergestellten, noch heißen anorganischen Fasern aufgesprüht. Das Wasser verdampft dann weitgehend und die Zusammensetzung bleibt im wesentlichen unausgehärtet als viskose Masse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200°C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für textile Flächengebilde, wie Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z.B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das erfindungsgemäße Bindemittel vorzugsweise im Gewichtsverhältnis Faser/Bindemittel (fest) von 10:1 bis 1:1, besonders bevorzugt von 6:1 bis 3:1 auf das Rohfaservlies z.B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC.

Bei der Verwendung als Dachbahnen werden die gebundenen Faservliese im allgemeinen mit Bitumen beschichtet.

Aus den erfindungsgemäßen wässrigen Zusammensetzungen lassen sich weiterhin geschäumte Platten oder Formkörper herstellen. Dazu wird zunächst das in der Zusammensetzung enthaltene Wasser bei Temperaturen von < 100°C bis zu einem Gehalt von < 20 Gew.-% entfernt. Die so erhaltene viskose Zusammensetzung wird dann bei Temperaturen > 100°C, vorzugsweise bei 120 bis 300°C, verschäumt. Als Treibmittel kann z.B. das in der Mischung noch enthaltene Restwasser und/oder die bei der Härtungsreaktion entstehenden gasförmigen Reaktionsprodukte dienen. Es können jedoch auch handelsübliche Treibmittel zugesetzt werden. Die entstehenden vernetzten Polymerschäume können beispielsweise zur Wärmedämmung und zur Schallisolierung eingesetzt werden.

Mit den erfindungsgemäßen Zusammensetzungen lassen sich durch Imprägnierung von Papier und anschließende schonende Trocknung nach den bekannten Verfahren sogenannte Laminate, z.B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die erfindungsgemäßen Zusammensetzungen können weiterhin zur Herstellung von Schleifpapier und Schleifkörpern nach den üblicherweise mit Phenolharz als Bindemittel durchgeführten Herstellverfahren verwendet werden. Bei der Herstellung von Schleifpapieren wird auf ein geeignetes Trägerpapier zunächst eine Schicht der erfindungsgemäßen Bindemittel als Grundbinder aufgetragen (zweckmäßigerweise 10 g/m²). In den feuchten Grundbinder wird die gewünschte Menge an Schleifkorn eingestreut. Nach einer Zwischen-trocknung wird eine Deckbinderschicht aufgetragen (z.B. 5 g/m²). Das auf diese Weise beschichtete Papier wird anschließend zur Aushärtung noch 5 Minuten lang bei 170°C getempert.

Die erfindungsgemäßen Polymerdispersionen und thermisch härtbaren Zusammensetzungen sind weiterhin geeignet als Kernsandbindemittel zur Herstellung von Gußformen und Kernen für den Metallguß nach üblichen Verfahren sowie als Bindemittel für Kokillendämmplatten.

Die erfindungsgemäßen Polymerdispersionen und thermisch härtbaren Zusammensetzungen eignen sich weiter als Bindemittel für Beschichtungen, Heißsiegellacke oder Kaschierklebstoffe.

Die Erfindung soll nun durch die folgenden Beispiele näher veranschaulicht werden. Die nichtflüchtigen Anteile (Feststoffgehalte) wurden in einem Umluft-Trockenschrank aus dem Gewichtsverlust einer 1 g-Probe bestimmt, die 2 h lang bei 120°C getrocknet wurde. Die Viskosität der Proben wurde mit Hilfe eines Rotationsviskosimeters (Rheomat) der Firma Paar Physica bei einer Schergeschwindigkeit von 250 s⁻¹ gemäß DIN 53019 bei 23°C bestimmt. Die K-Werte der wasserlöslichen Polymerisate (gelöstes Polymerisat) wurden in 1%iger wässriger Lösung in Analogie zu DIN 53726 gemessen.

### Beispiel 1:

In einem 4 l-Glasgefäß mit Ankerrührer (220 Upm) wurden 356 g Wasser, 1076 g einer 45 Gew.-%igen wäßrigen Lösung eines Acrylsäure-Maleinsäure-Copolymerisats (Zusammensetzung AS:MS 70:30 Gew.-%; pH-Wert 1,7; K-Wert 17), 300 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 49,0 % nichtflüchtige Anteile und hat einen pH-Wert von 1,9. Die Viskosität der erhaltenen Polymer-Dispersion beträgt 501 mPas.

| | |
|---|---|
| Zulauf 1: | 680 g Styrol |
| | 80 g Methacrylsäure |
| | 40 g 2-Hydroxyethylacrylat |
| Zulauf 2: | 150 g vollentsalztes Wasser |
| | 8 g Natriuzmperoxodisulfat |

### Beispiel 2:

In einem 4 l-Glasgefäß mit Ankerrührer (120 Upm) wurden 472 g Wasser, 960 g einer 50 Gew.-%igen wäßrigen Lösung eines Acrylsäure-Maleinsäure-Copolymerisats (Zusammensetzung AS:MS 50:50 Gew.-%; pH-Wert 1,7; K-Wert 12), 300 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 49,1 % nichtflüchtige Anteile und hat einen pH-Wert von 1,9. Die Viskosität der erhaltenen Polymer-Dispersion beträgt 96 mPas.

| | |
|---|---|
| Zulauf 1: | 680 g Styrol |
| | 80 g Methacrylsäure |
| | 40 g 2-Hydroxyethylacrylat |
| Zulauf 2: | 150 g vollentsalztes Wasser |
| | 8 g Natriumperoxodisulfat |

### Beispiel 3:

In einem 4 l-Glasgefäß mit Ankerrührer (120 Upm) wurden 200 g Wasser, 1071 g einer 45 Gew.-%igen wäßrigen Lösung eines Acrylsäure-Maleinsäure-Copolymerisats (Zusammensetzung AS:MS 70:30 Gew.-%; pH-Wert 1,7; K-Wert 17), 260 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 48,1 % nichtflüchtige Anteile und hat einen pH-Wert von 1,9. Die Viskosität der erhaltenen Polymer-Dispersion beträgt 1730 mPas.

| | |
|---|---|
| Zulauf 1: | 161 g vollentsalztes Wasser |
| | 680 g Styrol |
| | 80 g Methacrylsäure |
| | 40 g 2-Hydroxyethylacrylat |
| | 40 g Lutensol FA 12 (40 %ige wäßrige Lösung) |
| Zulauf 2: | 150 g vollentsalztes Wasser |
| | 8 g Natriumperoxodisulfat |

### Beispiel 4:

In einem 4 l-Glasgefäß mit Ankerrührer (120 Upm) wurden 851 g Wasser, 786 g einer 45 Gew.-%igen wäßrigen Lösung eines Acrylsäure-Maleinsäure-Copolymerisats (Zusammensetzung AS:MS 70:30 Gew.-%; pH-Wert 1,7; K-Wert 17), 225 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 38,6 % nichtflüchtige Anteile und hat einen pH-Wert von 2,3. Die Viskosität der erhaltenen Polymer-Dispersion beträgt 666 mPas.

| | |
|---|---|
| Zulauf 1: | 510 g Methylmethacrylat |
| | 60 g Methacrylsäure |
| | 30 g Glycidylmethacrylat |
| Zulauf 2: | 100 g vollentsalztes Wasser |
| | 6 g Natriumperoxodisulfat |

### Beispiel 5:

In einem 4 l-Glasgefäß mit Ankerrührer (120 Upm) wurden 307 g Wasser, 786 g einer 45 Gew.-%igen wäßrigen Lösung eines Acrylsäure-Maleinsäure-Copolymerisats (Zusammensetzung AS:MS 70:30 Gew.-%; pH-Wert 1,7; K-Wert 17), 225 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 47,4 % nichtflüchtige Anteile und hat einen pH-Wert von 1,9. Die Viskosität der erhaltenen Polymer-Dispersion beträgt 1200 mPas.

| | |
|---|---|
| Zulauf 1: | 450 g 2-Ethylhexylacrylat |
| | 60 g Styrol |
| | 60 g Methacrylsäure |
| | 30 g 2-Hydroxyethylacrylat |
| Zulauf 2: | 94 g vollentsalztes Wasser |
| | 6 g Natriumperoxodisulfat |

### Beispiel 6:

In einem 4 l-Glasgefäß mit Ankerrührer (120 Upm) wurden 820 g Wasser, 779 g einer 46 Gew.-%igen wäßrigen Lösung eines Acrylsäure-Maleinsäure-Copolymerisats (Zusammensetzung AS:MS 90:10 Gew.-%; pH-Wert 1,7; K-Wert 14), 224 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C die Restmengen von Zulauf 1 und 2 innerhalb von 3 h räumlich getrennt kontinuierlich zugeführt. Das so hergestellte Polymerisat enthält 39,5 % nichtflüchtige Anteile und hat einen pH-Wert von 2,1. Die Viskosität der erhaltenen Polymer-Dispersion beträgt 98 mPas.

| | |
|---|---|
| Zulauf 1: | 255 g Styrol |
| | 225 g Methylmethacrylat |
| | 60 g Methacrylsäure |
| | 30 g 2-Hydroxyethylacrylat |
| Zulauf 2: | 94 g vollentsalztes Wasser |
| | 6 g Natriumperoxodisulfat |

### Beispiel 7:

In einem 4 l-Glasgefäß mit Ankerrührer (220 Upm) wurden 710 g Wasser, 537 g einer 50 Gew.-%igen wäßrigen Lösung eines Acrylsäure-Maleinsäure-Copolymerisats (Zusammensetzung AS:MS 50:50 Gew.-%; pH-Wert 1,7; K-Wert 12), 68 g Dinoramox S12 (Fa. Elf-Atochem, ethoxyliertes Talgfettpropylendiamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 41,1 % nichtflüchtige Anteile und hat einen pH-Wert von 2,1. Die Viskosität der erhaltenen Polymer-Dispersion beträgt 159 mPas.

| | |
|---|---|
| Zulauf 1: | 265 g Styrol |
| | 265 g Methylmethacrylat |
| | 70 g Methacrylsäureanhydrid |
| Zulauf 2: | 60 g vollentsalztes Wasser |
| | 5 g Natriumperoxodisulfat |

### Vergleichsbeispiel V-1:

In einem 4 l-Glasgefäß mit Ankerrührer (220 Upm) wurden 361 g Wasser, 1076 g einer 45 Gew.-%igen wäßrigen Lösung eines Acrylsäure-Maleinsäure-Copolymerisats (Zusammensetzung AS:MS 70:30 Gew.-%; pH-Wert 1,7; K-Wert 17), 300 g einer 40 Gew.-%igen wäßrigen Lösung von Lutensol FA 12 (Fa. BASF, ethoxyliertes Oleylmonoamin, mittlerer Ethoxylierungsgrad = 12) vorgelegt. Bei einer Innentemperatur von 90°C wurden 5 Gew.-% der Gesamtmenge eines Zulauf 1 und 10 Gew.-% der Gesamtmenge eines Zulauf 2 zugegeben. Die Reaktionsmischung wird 10 min bei 90°C anpolymerisiert. Anschließend wurden bei 90°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 48,5 % nichtflüchtige Anteile und hat einen pH-Wert von 1,8. Die Viskosität der erhaltenen Polymer-Dispersion beträgt 621 mPas.

| | |
|---|---|
| Zulauf 1: | 680 g Styrol |
| | 80 g Methylmethacrylat |
| | 40 g 2-Hydroxyethylacrylat |
| Zulauf 2: | 150 g vollentsalztes Wasser |
| | 8 g Natriumperoxodisulfat |

### Vergleichsbeispiel V-2:

In einem 4 l-Glasgefäß mit Ankerrührer (120 Upm) wurden 550 g Wasser vorgelegt. Bei einer Innentemperatur von 93°C wurden 5 Gew.-% der Gesamtmenge eines Zulauf 1 und 10 Gew.-% der Gesamtmenge eines Zulauf 2 zugegeben. Die Reaktionsmischung wird 10 min bei 93°C anpolymerisiert. Anschließend wurden bei 93°C innerhalb von 3 h die Restmenge von Zulauf 1 und innerhalb von 3,5 h die Restmenge von Zulauf 2 räumlich getrennt kontinuierlich zugeführt. Anschliessend wurde die Polymerdispersion durch Zugabe von 25 gew.-%iger wässriger Ammoniaklösung neutralisiert. Das so hergestellte Polymerisat enthält 50,5 % nichtflüchtige Anteile und hat einen pH-Wert von 7,4. Die Viskosität der erhaltenen PolymerDispersion beträgt 1465 mPas.

| | |
|---|---|
| Zulauf 1: | 532 g vollentsalztes Wasser |
| | 31 g Dowfax 2A1 (Fa. Dow, 45 gew.-%ige Lösung eines zweifach kernsulfonierten Alkylbiphenylethers) |
| | 1190 g Styrol |
| | 140 g Methacrylsäure |
| | 70 g 2-Hydroxyethylacrylat |
| Zulauf 2: | 200 g vollentsalztes Wasser |
| | 8 g Natriumperoxodisulfat |

### Vergleichsbeispiel V-3:

Die in Vergleichsbeispiel V-2 beschriebene Polymerdispersion wird unter Rühren mit 60 Gew.-% (bezogen auf den Feststoffgehalt der Polymerdispersion) einer 50 Gew.-%igen wäßrigen Lösung eines Acrylsäure-Maleinsäure-Copolymerisats (Zusammensetzung AS:MS 50:50 Gew.-%; pH-Wert 1,7; K-Wert (12) gemischt. Das so erhaltene Material enthält 50,1 % nichtflüchtige Anteile und hat einen pH-Wert von 1,6. Die Viskosität der Mischung beträgt 2240 mPas.

Die obigen Beispiele zeigen, dass durch Emulsionspolymerisation in Gegenwart des gelösten Polymerisats und des Amins der Formel I stabile, niederviskose Polymerdispersionen erhalten werden. Die erfindungsgemäßen Polymerdispersionen enthalten einen hohen Anteil an Carboxyl-Gruppen, der von den in den dispergierten Polymerisatteilchen enthaltenen Säuremonomere und durch die substantiellen Mengen an säurereichem gelöstem Polymerisat im Serum gebildet wird.

### Prüfung der Beispiele als Bindemittel für Naturfasermatten

Zur Prüfung als Bindemittel werden ausgewählten Beispielen und Vergleichsbeispielen jeweils 6 Gew.-% Triethanolamin und 2 Gew.-% Hypophosphorige Säure (bezogen auf nichtflüchtige Anteile der Polymerdispersion) zugesetzt und anschließend durch Zugabe von vollentsalztem Wasser auf einen Feststoffgehalt von 20% verdünnt. Die so erhaltenen Zusammensetzungen wurden als Bindemittel zur Bindung von Jute-Sisalmatten eingesetzt.

Die Fasermatten aus einem 1:1 Gemisch von Jute- und Sisalfasern (mittleres Flächengewicht 1200 g/m², Restfeuchtegehalt 7%, Hersteller Fa. Braunschweiger Jute- und Flachs Industriebetriebe GmbH) werden mittels einer Foulard-Walze mit einer 20%igen Bindemittelflotte imprägniert, so dass, bezogen auf das trockene Fasergewicht, 30 Gew.-% nichtflüchtige Bindemittelanteile aufgebracht werden.

Die imprägnierten Fasermatten (35x30 cm) werden in einem Umlufttrockenschrank bei 50°C auf einen Restfeuchtegehalt von 10 %, bezogen auf trockene Fasern, getrocknet und anschließend mit einer hydraulischen Presse bei einer Preßtemperatur von 200°C und einem Preßdruck von 1,5 N/mm² 60 Sekunden verpreßt.

Die Dickenguellung (DQ) wird bestimmt als relative Zunahme der Dicke von 2x2 cm großen Stücken der verpreßten Fasermatten nach 2 Stunden beziehungsweise 24 Stunden Lagerung in Wasser bei 23°C. Zur Beurteilung der Klimabeständigkeit werden 3x10 cm große Stücke der verpreßten Fasermatten in einem Klimaschrank bei 80°C und 90% relative Luftfeuchte 1 beziehungsweise 7 Tage gelagert. Die Festigkeit (F) beziehungsweise die Abnahme der Festigkeit der Prüfkörper wird dann relativ zueinander mit Noten bewertet (Note 1 = sehr hohe Festigkeit bis Note 5 = sehr geringe Festigkeit). Desweiteren wird die Durchbiegung (DB) von 3 cm breiten Stücken der Fasermatten untersucht, die 1 beziehungsweise 7 Tage unter den oben aufgeführten Feuchtklimabedingungen gelagert worden sind. Die Stützweite der Probekörper im Klimaschrank beträgt 23 cm.

Für die ausgewählten Beispiele und Vergleichsbeispiele wurden die in Tabelle 1 dargestellten Werte erhalten:

Die in Tabelle 1 aufgeführten Ergebnisse verdeutlichen, dass die erfindungsgemäßen Zusammensetzungen (Beispiele 2, 3, 6 und 7) zu Fasermatten mit hoher mechanischer Festigkeit und Wasserresistenz auch nach längerer Lagerung der Platten im Feuchtklima führen. Analoge Zusammensetzungen, die im Latex-Polymerisat Methylmethacrylat anstelle von Methacrylsäure (Vergleichsbeispiel 1) enthalten, führen zu Fasermatten mit vergleichbarer Festigkeit und Dickenquellung, aber mit deutlich höherer Durchbiegung. Die anionische stabilisierte Styrolacrylat-Dispersion (Vergleichsbeispiel V-2) führt zu signifikant schlechteren Probekörpern, sowohl bezüglich der Dickenquellung, als auch bezüglich der Festigkeit und der Durchbiegung. Die nachträgliche Abmischung dieser Dispersion mit einem löslichen Säurepolymerisat, wie es auch zur Herstellung der erfindungsgemäßen Polymerdispersionen verwendet werden kann, führt ebenfalls zu Faserplatten mit deutlich schlechteren mechanischen Kennwerten, wie das Vergleichsbeispiel V-3 verdeutlicht. Darüberhinaus werden durch die nachträgliche Zugabe der Polysäure zur Polymerdispersion sehr hochviskose Zusammensetzungen erhalten.

**Tabelle 1**

| Kennwerte der thermisch gehärteten Jute-Sisal-Fasermatten | | | | | | | |
|---|---|---|---|---|---|---|---|
| Probe | 2 | 3 | 6 | 7 | V-1 | V-2 | V-3 |
| Platten-Dicke [mm] | 2,00 | 1,97 | 1,96 | 1,97 | 1,94 | 1,95 | 1,98 |
| Dichte [g/cm³] | 0,73 | 0,75 | 0,74 | 0,74 | 0,79 | 0,74 | 0,75 |
| DQ 2 h [%] | 19 | 20 | 14 | 13 | 18 | 36 | 27 |
| DQ 24 h [%] | 21 | 22 | 19 | 18 | 20 | 61 | 36 |
| F 24 h [Note 1-5] | 1 | 1 | 1 | 1 | 1 | 2 | 2 |
| F 7 d [Note 1-5] | 1 | 1 | 1 | 1 | 1 | 4 | 3 |
| DB 24 h [mm] | 7 | 3 | 5 | 5 | 14 | 25 | 23 |
| DB 7 d [mm] | 16 | 8 | 10 | 12 | 25 | >50 | 26 |

### Bestimmung des Gelgehaltes der erfindungsgemäßen Zusammensetzungen

Zur Bestimmung der Wasserbeständigkeit kann der Gelgehalt der thermisch gehärteten erfindungsgemäßen Zusammensetzungen, d.h. der in Wasser unlösliche Anteil, herangezogen werden. Dazu werden ausgewählte Beispiele und Vergleichsbeispiele zu etwa 5 mm dicken Filmen ausgegossen, die mehrere Tage bei 50°C im Umlufttrockenschrank bis zur Gewichtskonstanz getrocknet werden. Anschließend werden die Filme 15 Minuten lang bei 150°C gehärtet. Das so erhaltene Material wird 24 Stunden lang bei 60°C in Wasser gelagert und kurz nach der Wasserlagerung kann der Gelgehalt als Quotient des gehärteten Filmgewichtes vor und nach der Wasserlagerung bestimmt werden.

Die auf diese Weise bestimmten Gelanteile ausgewählter Beispiele und Vergleichsbeispiele sind in Tabelle 2 aufgeführt. Es wurden jeweils die reinen Polymerdispersionen sowie deren Mischungen mit jeweils 6 Gew.-% Triethanolamin und 2 Gew.-% Hypophosphorige Säure (bezogen auf nicht flüchtige Anteile der Polymerdispersionen) untersucht.

**Tabelle 2**

| Gelgehalte der erfindungsgemäßen Polymerdispersionen und Mischungen | | |
|---|---|---|
| Probe | Gelgehalt [%] (Dispersion) | Gelgehalt [%] (Mischung) |
| Beispiel 2 | 87 | 93 |
| Beispiel 7 | 84 | 98 |
| Vergleichsbeispiel | 1 82 | 84 |
| Vergleichsbeispiel | 2 84 | 72 |
| Vergleichsbeispiel | 3 64 | 77 |

Die erhaltenen Ergebnisse machen deutlich, dass die erfindungsgemäßen nach thermischer Härtung einen hohen Gelgehalt aufweisen, der sich durch Zusatz eines multifunktionellen Alkohols und eines Reaktionsbeschleunigers weiter steigern läßt. Das Vergleichsbeispiel V-1, (ohne Methacrylsäure im Latex-Polymerisat) zeigt einen etwas geringeren Gelgehalt, eine Steigerung des Wertes durch Zusatz von Triethanolamin und Hypophosphoriger Säure ist bei dieser Probe nicht möglich. Die Styrolacrylat-Dispersion (Vergleichsbeispiel V-2) zeigt ebenfalls einen Gelgehalt von über 80%, bei Zugabe von Triethanolamin und Reaktionsbeschleuniger tritt jedoch eine Verringerung des Gelgehaltes auf. Die Abmischung der Styrolacrylat-Dispersion mit der Polysäure (Vergleichsbeispiel V-3) zeigt ohne und mit Zusatz von Triethanolamin und Reaktionsbeschleuniger vergleichsweise geringe Gelgehalte.

### Bestimmung der Pendelhärte der erfindungsgemäßen Zusammensetzungen

Eine Besonderheit der erfindungsgemäßen Zusammensetzungen ist der Härteanstieg deren Filme nach thermischer Härtung. Zur Verdeutlichung dieses Phänomens werden von ausgewählten Beispielen und Vergleichsbeispielen beziehungsweise deren Mischungen mit jeweils 6 Gew.-% Triethanolamin und 2 Gew.-% Hypophosphorige Säure (bezogen auf nichtflüchtige Anteile der Polymerdispersionen) Filme von etwa 100 µm Dicke auf Glasträger durch mehrtägiges Trocknen bei 23°C hergestellt. Die Pendelhärte dieser Filme wird nach 10-minütiger Temperung bei 160°C bestimmt. Dazu wird ein Pendelhärtemeßgerät der Fa. Byk Mallinckrodt GmbH verwendet.

Die erhaltenen Ergebnisse, aufgeführt in Tabelle 3, machen deutlich, dass sich die Filmhärte der erfindungsgemäßen Polymerdispersionen durch 10 minütiges Tempern bei 160°C deutlich erhöhen läßt. Dies gilt auch für die Probe 5, die aufgrund ihrer geringen Glasübergangstemperatur vergleichsweise geringe Pendelwerte aufweist. Durch den Zusatz von Triethanolamin und Hypophosphoriger Säure wird zwar vor der thermischen Härtung eine geringfügige Abnahme der Pendelhärte, d.h. eine Erweichung der Filme, beobachtet. Nach Temperung weisen diese Proben jedoch höhere Meßwerte als die reinen Dispersionen auf.

**Tabelle 3**

| Pendelhärte der erfindungsgemäßen Polymerdispersionen und Mischungen | | | | |
|---|---|---|---|---|
| | Pendelhärte [s] (Dispersion) | | Pendelhärte [s] (Mischung) | |
| Probe | vor Temperung | nach Temperung | vor Temperung | nach Temperung |
| Beispiel 1 | 132 | 216 | 120 | 239 |
| Beispiel 2 | 129 | 220 | 120 | 240 |
| Beispiel 5 | 32 | 131 | 30 | 184 |

## Patentansprüche

1. Polymerdispersion, enthaltend in einem wässrigen Medium
a) dispergierte Teilchen eines Polymerisats aus Einheiten ethylenisch ungesättigter Monomere, wovon mehr als 5 und bis zu 20 Gew.-% α,β-ethylenisch ungesättigte Mono- oder Dicarbonsäuren darstellen;
b) ein gelöstes Polymerisat, das in einpolymerisierter Form 60 bis 100 Gew.-% wenigstens einer α,β-ethylenisch ungesättigten Mono- oder Dicarbonsäure oder Salze davon enthält; und
c) ein Amin der Formel I 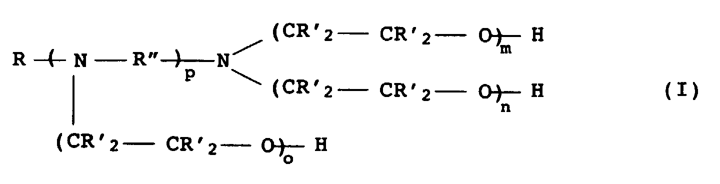 worin
R für einen Alkyl- oder Alkylenrest mit mindestens 6 Kohlenstoffatomen oder einen Alkylphenylrest mit mindestens 6 Kohlenstoffatomen in der Alkylgruppe steht;
R' jeweils unabhängig für H oder C₁₋₄-Alkyl steht;
R'' für C₁₋₄-Alkylen steht;
m, n und o unabhängig voneinander für eine Zahl ≥ 0 stehen, mit der Maßgabe, dass mindestens ein Wert von m, n und o von 0 verschieden ist,
p für 0 oder 1 steht,
wobei das Gewichtsverhältnis auf Feststoffbasis der dispergierten Teilchen zu gelöstem Polymerisat im Bereich von 7:1 bis 1:7 und das Gewichtsverhältnis von gelösten Polymerisat zu Amin im Bereich von 20:1 bis 2:1 liegt;
wobei die Polymerdispersion erhältlich ist durch Emulsionspolymerisation der ethylenisch ungesättigten Monomere in Gegenwart des gelösten Polymerisats und des Amins der Formel I.

2. Polymerdispersion nach Anspruch 1, dadurch gekennzeichnet, dass das Gewichtsverhältnis der dispergierten Teilchen zu gelöstem Polymerisat im Bereich von 5:1 bis 1:5 liegt.

3. Polymerdispersion nach Anspruch 1, dadurch gekennzeichnet, dass die α,β-ethylenisch ungesättigte Mono- oder Dicarbonsäure unter Acrylsäure, Methacrylsäure, Itakonsäure, Maleinsäure, Fumarsäure und/oder Crotonsäure ausgewählt ist.

4. Polymerdispersion nach einem der vorhergehenden Ansprüche, dadurch gekennzeichnet, dass die dispergierten Teilchen aus einem Copolymerisat von (Meth)acrylsäure mit einem oder mehreren unter C₁-C₁₂-Alkyl(meth)acrylaten; C₁-C₁₂-Hydroxyalkyl(meth)acrylaten, Styrol, Butadien und Vinylacetat ausgewählten Monomeren bestehen.

5. Polymerdispersion nach einem der vorhergehenden Ansprüche, dadurch gekennzeichnet, dass es sich bei dem gelösten Polymerisat um ein (Meth)acrylsäure-Copolymerisat mit einem massenmittleren Molekulargewicht von weniger als 100 kg/mol handelt.

6. Thermisch härtbare Zusammensetzung, enthaltend eine Polymerdispersion nach einem der vorhergehenden Ansprüche, einen multifunktionellen Alkohol und wahlweise einen Reaktionsbeschleuniger.

7. Thermisch härtbare Zusammensetzung nach Anspruch 6, dadurch gekennzeichnet, dass es sich bei dem polyfunktionellen Alkohol um einen Aminoalkohol handelt.

8. Thermisch härtbare Zusammensetzung nach Anspruch 6 oder 7, dadurch gekennzeichnet, dass es sich bei dem Reaktionsbeschleuniger um eine phosphorhaltige Verbindung handelt.

9. Thermisch härtbare Zusammensetzung nach Anspruch 6, 7 oder 8, dadurch gekennzeichnet, dass der multifunktionelle Alkohol in solcher Menge relativ zur Polymerdispersion vorliegt, dass das Gewichtsverhältnis von gelöstem Polymerisat zu multifunktionellem Alkohol im Bereich von 100:1 bis 1:1 liegt.

10. Thermisch härtbare Zusammensetzung nach einem der Ansprüche 6 bis 9, dadurch gekennzeichnet, dass sie 0,1 bis 5 Gew.-%, bezogen auf das Gesamtgewicht nichtflüchtiger Bestandteile der Zusammensetzung, Reaktionsbeschleuniger enthält.

11. Zwei- oder dreidimensionales Gebilde, dadurch erhältlich, dass man ein teilchen- oder faserförmiges Substrat mit einer Polymerdispersion nach einem der Ansprüche 1 bis 5 oder einer thermisch härtbaren Zusammensetzung nach einem der Ansprüche 6 bis 10 imprägniert und das imprägnierte Substrat aushärtet.

12. Verwendung einer Polymerdispersion nach einem der Ansprüche 1 bis 5 oder einer thermisch härtbaren Zusammensetzung nach einem der Ansprüche 6 bis 10 als Bindemittel für Formkörper, Beschichtungen, Heißsiegellacke oder Kaschierklebstoffe.
